# DEMANDE DE BREVET EUROPEEN

(11) **EP 2 020 324 A1**
(43) Date de publication de la demande: **04.02.2009**
(21) Numéro de dépôt: 08370015.3
(22) Date de dépôt: 23.07.2008
(51) Int. Cl.: B60J 7/10

(54) **Ensemble de fixation d'un arceau sur une benne**

(30) Priorité: 23.07.2007 FR 0705325
(71) Demandeur: BENALU, 62800 Lievin (FR)
(72) Inventeur: Gressier, Christophe, 59251 Allennes Les Marais (FR)
(74) Mandataire: Matkowska, Franck

(57) **Abrégé**

L'ensemble de fixation d'un arceau (1) sur une benne (B), comprend un embout d'arceau (11), et un mécanisme de verrouillage/déverrouillage élastique (4), qui permet de solidariser l'embout d'arceau (11) avec la benne (B), et qui comprend un moyen de manoeuvre (43) permettant d'actionner le mécanisme de verrouillage/déverrouillage élastique (4) pour libérer l'embout d'arceau (11). Ce mécanisme de verrouillage/déverrouillage élastique (4) est logé à l'intérieur de l'embout d'arceau (10), le moyen de manoeuvre (43) de ce mécanisme (4) étant accessible Cet ensemble comprend un support (3 , 3') qui est destiné à être fixé à la benne (B) et qui comprend un plot (30) ; l'embout (11) comporte une cavité (12) permettant son emboîtement sur le plot (30) du support (3, 3') ; les moyens de verrouillage/déverrouillage élastique (4) comportent une gâche (40), qui est apte à coopérer avec le plot (30) du support d'arceau (3, 3'), et qui est repoussée élastiquement dans une position de verrouillage dans laquelle elle permet de bloquer au moins en translation l'embout d'arceau (11) sur le plot (30) ; le moyen de manoeuvre (43) permet d'amener la gâche (40) dans une position escamotée dite de déverrouillage dans laquelle la gâche (40) ne fait pas obstacle à la libération de l'embout d'arceau (11).

## Description

### Domaine technique

La présente invention concerne la fixation d'arceaux sur une benne, lesdits arceaux permettant de soutenir une bâche destinée à recouvrir le contenu de la benne. Elle a pour objet un nouvel ensemble pour fixer un arceau sur une benne, ainsi qu'une benne équipée d'arceaux. L'invention trouve principalement son application dans le domaine du transport de marchandises, notamment de vrac, et plus particulièrement pour les porteurs, remorques et semi remorques équipées de bennes ainsi que les fourgons à fond mouvant et les conteneurs.

### Art antérieur

Les arceaux sont utilisés de manière courante dans le domaine du transport de vrac pour soutenir des moyens de recouvrement souples, par exemple une bâche, recouvrant le contenu d'une benne, d'une remorque ou encore d'un container. A cet effet, les arceaux sont fixés de manière transversale par rapport aux parois longitudinales de la benne et contribuent en outre à rigidifier la structure en la renforçant. Dans le présent texte on désignera par le terme « benne » tout type de container comprenant une ouverture supérieure ménagée pour le chargement ou le déchargement de marchandises.

Les arceaux sont de manière courante fixés aux parois longitudinales de la benne et sont, pour leur manipulation, articulés en rotation selon un axe qui est vertical et perpendiculaire au plancher de la benne. En effet, lors d'opération de chargement ou de déchargement de la benne, il est nécessaire d'avoir un espace dégagé au dessus de la benne afin de manipuler son contenu sans contraintes et ne pas gêner le passage dudit contenu lors de son chargement ou son déchargement. A cet effet, dans une première position dite de soutien, les arceaux supportent une bâche qui recouvre la benne et sont disposés transversalement de manière à relier les parois longitudinales de la benne. Dans une deuxième position dite de repos, les arceaux sont disposés parallèlement aux parois longitudinales de la benne afin de ne pas obstruer l'accès par le dessus de la benne et gêner le chargement ou le déchargement de la benne.

Pour passer de la première position dite de soutien à la deuxième position dite de repos, il est nécessaire de libérer l'une des extrémités d'arceau de la paroi longitudinale de la benne afin que ledit arceau puisse pivoter autour d'un axe vertical au niveau de son extrémité opposée.

Les arceaux sont d'une manière générale déplacés de leur position de soutien à leur position de repos manuellement par un opérateur, le plus souvent le conducteur du camion. A cet effet, il doit libérer l'une des extrémités d'arceau et faire pivoter l'arceau jusqu'à sa position de repos le long d'une rive de la benne, une rive étant une poutre longitudinale supérieure de la benne.

Une solution largement connue d'ensemble pour supporter un arceau de benne est par exemple décrite dans le brevet américain US 5 860 547. Cet ensemble comprend un premier support creux fixé sur l'intérieur d'une première paroi longitudinale de la benne et un deuxième support creux fixé sur l'intérieur d'une deuxième paroi longitudinale située en vis-à-vis de la première paroi. L'ensemble comporte également un arceau comprenant un premier plot situé à une première extrémité de l'arceau et un deuxième plot situé sur une deuxième extrémité opposée à ladite première extrémité. Le premier plot est logé dans le premier support et est maintenu dans le support au moyen d'une goupille ; il peut toutefois coulisser verticalement dans ledit premier support. Le deuxième plot, plus court que le premier plot, est logé librement dans le deuxième support, si bien que pour faire pivoter l'arceau, l'opérateur lève l'arceau au niveau du premier plot jusqu'à ce qu'il libère le deuxième plot du deuxième support, et fait pivoter l'arceau au niveau du premier support.

Cette solution est peu pratique car l'arceau est libre de se soulever ce qui peut conduire à des problèmes de sécurité. De plus, le déplacement de l'arceau d'une première position de soutien à une deuxième position de repos, et vice versa, s'avère fastidieux à réaliser pour l'opérateur. Enfin, les supports d'arceaux peuvent être endommagés par des marchandises lors du transport de la benne ou lors de son chargement/déchargement car ils sont fixés sur la face intérieure des parois longitudinales et donc à l'intérieur du volume utile de la benne.

Pour empêcher le soulèvement de l'arceau, on pourrait imaginer une goupille que l'on viendrait placer au travers du deuxième plot. Cependant cette solution contribuerait à rendre encore plus contraignant le déplacement de l'arceau d'une position de repos à une position de soutien et inversement.

Une autre solution décrite dans le brevet américain US 5 487 584 permet de pallier certains des inconvénients précités, en particulier la facilité de manipulation des arceaux. A cet effet, l'ensemble pour supporter les arceaux de benne comprend d'une part une pluralité de plaques, qui sont fixées à l'intérieur d'une première paroi longitudinale de la benne, qui sont destinées à supporter une première extrémité des arceaux, et qui sont aptes à laisser pivoter lesdits arceaux. D'autre part, l'ensemble comprend sur une deuxième paroi longitudinale disposée en vis-à-vis de la première paroi un mécanisme de verrouillage/déverrouillage des arceaux. Ce mécanisme comprend un moyen d'immobilisation d'un premier arceau et des moyens empêchant le soulèvement des autres arceaux. Le premier arceau est relié aux autres arceaux au moyen d'une barre longitudinale si bien que lorsque l'opérateur manipule le premier arceau, l'ensemble des arceaux se voit guidé par ledit premier arceau. Le moyen d'immobilisation comprend une plaque fixée sur la paroi intérieure de la benne et inclinée par rapport à ladite paroi intérieure et une gâche montée sur le premier arceau associée à un ressort. Lors de la mise en place du premier arceau en position de soutien, la gâche vient s'appuyer contre la plaque inclinée provoquant la compression du ressort. Puis, en fin de course, le ressort repousse la gâche contre la paroi intérieure de la benne permettant ainsi de bloquer en rotation le premier arceau. Les moyens permettant d'empêcher le soulèvement des autres arceaux sont fixés à l'intérieur de la benne et comprennent chacun une rainure longitudinale apte à recevoir la deuxième extrémité des arceaux pour empêcher leur soulèvement. Les moyens de verrouillage et déverrouillage élastiques peuvent être actionnés de l'extérieur de la benne en tirant sur une corde pour l'immobilisation et la libération de l'arceau.

La solution décrite dans ce document permet ainsi de pallier la difficulté pour l'opérateur de déplacer les arceaux d'une position de repos à une position de soutien, et inversement. Egalement, la solution proposée dans ce document s'avère nettement plus sure en position de soutien car les arceaux sont non seulement bloqués en rotation mais aussi en translation. Ainsi ils ne peuvent se soulever.

Néanmoins, cette solution est relativement complexe à mettre en oeuvre. De plus, en position de soutien, les arceaux ne sont pas parfaitement maintenus. En position de repos, les arceaux sont libres de pivoter vers l'extérieur de la benne, ce qui engendre des risques de détérioration de la bâche et du dérouleur de bâche. En effet, en pivotant, les arceaux sont susceptibles de s'accrocher à la bâche provoquant ainsi des déchirures. De plus, à l'instar du brevet US 5 860 547, les moyens d'immobilisation et les moyens anti-soulèvement sont logés à l'intérieur de la benne et dans le volume utile occupé par les marchandises. Ainsi, les marchandises peuvent de manière désavantageuse venir au contact desdits moyens et les détériorer ou nuire à leur bon fonctionnement.

On a également proposé dans le brevet US 5 472 256 une solution qui permet de fixer de manière amovible un arceau sur une benne et qui présente les caractéristiques techniques énoncées dans le préambule de la revendication 1. Ce pendant cette solution n'est pas satisfaisante, car elle ne permet par une liaison mécanique robuste et fiable entre l'arceau et la rive de la benne.

### Objectifs de l'invention

La présente invention a pour objectif de proposer un nouvel ensemble qui permet de fixer un arceau sur une benne de manière amovible, robuste et fiable, qui permet de facilement verrouiller ou déverrouiller l'arceau en position par rapport à la benne.

### Résumé de l'invention

Cet objectif est atteint par l'ensemble de fixation d'un arceau sur une benne tel que défini dans la revendication 1.

Dans une variante particulière de réalisation, afin notamment de préserver les moyens de verrouillage/déverrouillage des collisions avec les marchandises contenues dans la benne, le mécanisme de verrouillage/déverrouillage élastique de l'invention est de préférence logé à l'intérieur de l'embout d'arceau, et le moyen de manoeuvre de ce mécanisme est accessible.

L'invention a pour autre objet un arceau de benne et ensemble de fixation visé précédemment, l'embout d'arceau faisant partie intégrante de l'arceau ou étant une pièce rapportée.

Plus particulièrement, mais non nécessairement, la longueur de l'arceau est de préférence réglable. Dans une variante de réalisation, l'arceau comporte un profil d'arceau et l'embout d'arceau est une pièce rapportée, qui est coulissante par rapport à ce profil d'arceau, et qui peut être bloquée dans différentes positions pour le réglage de la longueur de l'arceau.

L'invention a enfin pour objet une benne équipée d'au moins un arceau et d'un ensemble de fixation visés précédemment.

De manière facultative selon l'invention, cette benne comporte les caractéristiques techniques additionnelles ci-après, prises isolément ou en combinaison :
- l'arceau est apte à pivoter à au moins une de ses deux extrémités par rapport à la benne ;
- chaque support d'arceau est fixé sur le dessus de la rive en dehors du volume utile de la benne ;
- à chaque arceau est associé au moins un support d'arceau qui permet de solidariser l'arceau avec la benne dans une position dite de soutien dans laquelle l'arceau est positionné transversalement à l'axe longitudinal avant/arrière de la benne ;
- à chaque arceau est associé au moins un support d'arceau qui permet de solidariser l'arceau avec la benne dans une position dite de repos, dans laquelle l'arceau est positionné le long de l'une des parois longitudinales de la benne ;
- dans sa position de repos, l'arceau est positionné au dessus d'une rive de la benne.

### Brève description des figures

D'autres caractéristiques et avantages de l'invention apparaîtront plus clairement à la lecture de la description détaillée ci-après d'une variante préférée de réalisation, laquelle description détaillée est donnée à titre d'exemple non limitatif et non exhaustif de l'invention, et en référence aux dessins annexés sur lesquels :
- la figure 1 est une représentation en perspective d'une benne de l'invention équipée d'arceaux placés dans une position de soutien, chaque arceau comprenant un ensemble de fixation conforme à l'invention,
- la figure 2 est une représentation en perspective de la benne de la figure 1, lorsque les arceaux sont placés dans une position de repos,
- la figure 3 est une vue de côté d'une première variante d'arceau,
- les figures 4 et 5 sont des représentations en perspective d'un embout d'arceau,
- les figures 6 et 7 sont des représentations en perspective d'un support d'arceau,
- la figure 8 est une vue en coupe du support d'arceau des figures 6 et 7,
- la figure 9 est une représentation en perspective de la gâche du mécanisme de verrouillage/déverrouillage,
- la figure 10 est une vue de côté de la gâche de la figure 9,
- la figure 11 est une représentation en perspective des moyens de rappel élastique du mécanisme de verrouillage et déverrouillage,
- la figure 12 est une représentation en perspective de la pièce de liaison du mécanisme de verrouillage/déverrouillage,
- la figure 13 est une vue de dessus des moyens d'actionnement de la gâche du mécanisme de verrouillage/déverrouillage
- la figure 14 est une vue de côté des moyens d'actionnement de la gâche du mécanisme de verrouillage/déverrouillage,
- la figure 15 est une représentation en perspective du mécanisme de verrouillage/déverrouillage,
- la figure 16 est une vue en coupe de l'ensemble de fixation d'un arceau sur une benne représenté dans une position où l'embout d'arceau est immobilisé sur le support,
- la figure 17 est une vue en coupe de l'ensemble de fixation d'un arceau sur une benne représenté dans une position où l'embout d'arceau est libéré du support,
- la figure 18 une vue de côté d'une deuxième variante d'arceau.

### Description détaillée

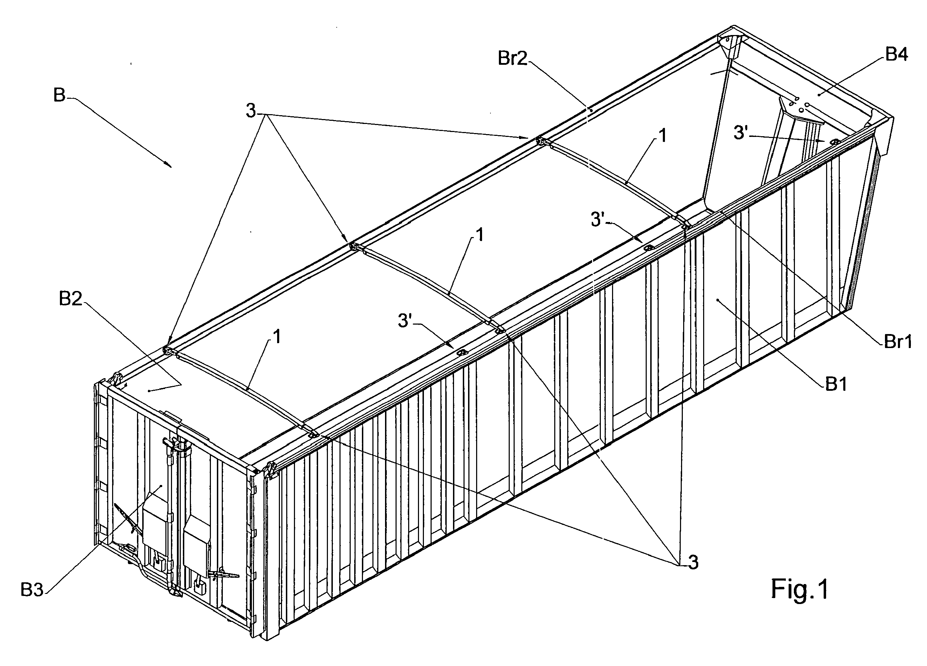

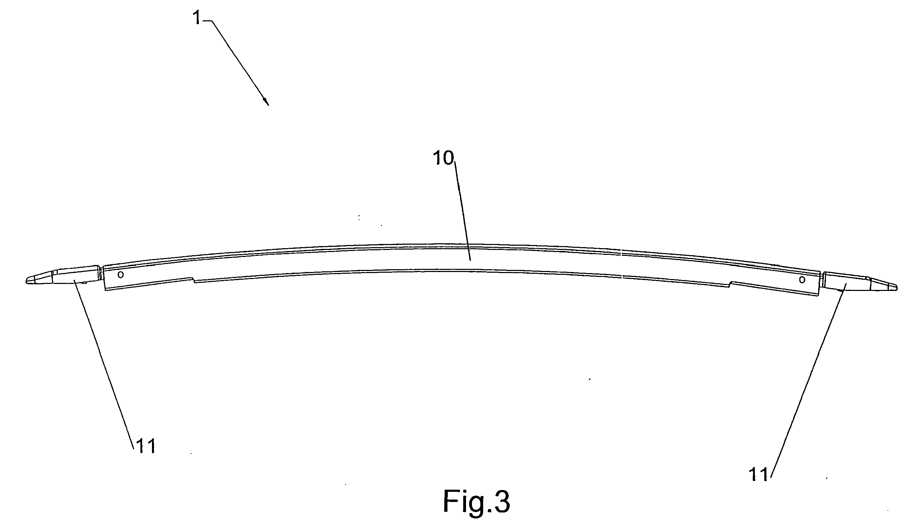

On a représenté à la figure 1 une benne B comprenant des arceaux 1 (figure 3) pour soutenir une bâche (non représentée). De manière usuelle la benne B comprend deux parois longitudinales (B1, B2) disposées en vis-à-vis l'une de l'autre, deux parois transversales (B3, B4) également disposées en vis-à-vis l'une de l'autre, un plancher servant d'embase aux parois (B1, B2, B3, B4) et une ouverture supérieure, située au dessus du plancher et permettant l'accès à des moyens de manutention lors du chargement ou du déchargement de la benne B. Les parois longitudinales (B1, B2) et transversales (B3, B4) ainsi que le plancher permettent de délimiter le volume utile de la benne, c'est-à-dire le volume que peuvent occuper les marchandises dans la benne.

La paroi longitudinale B1 comprend une rive Br1 et la paroi longitudinale B2 comprend une rive Br2. La rive est le terme technique employé par l'homme du métier pour désigner une poutre supérieure longitudinale d'une benne.

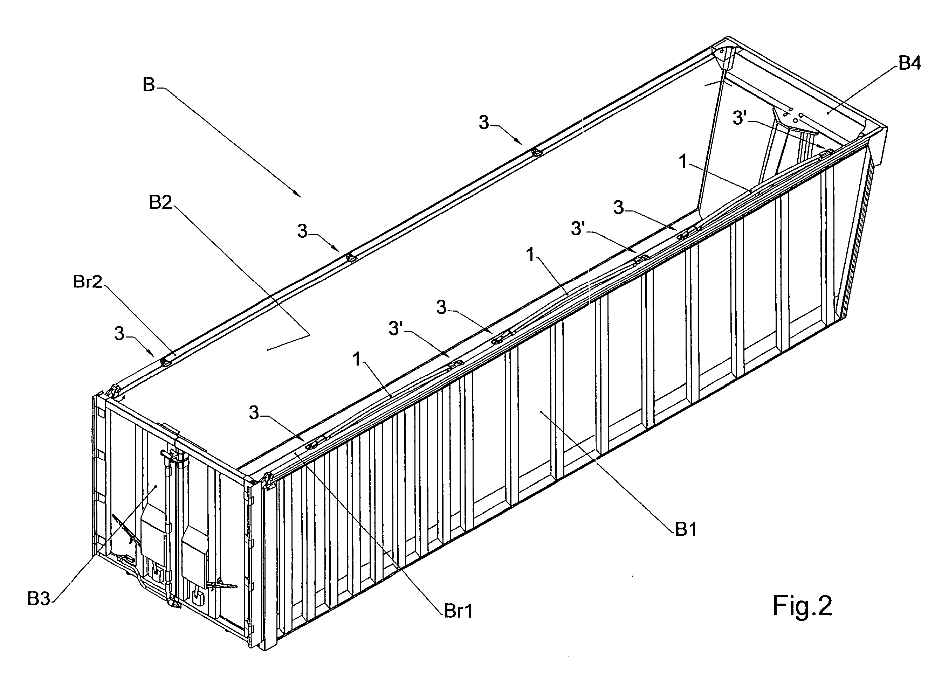

Chaque arceau 1 est monté pivotant par rapport à une rive de la benne à au moins une première extrémité, et selon un axe sensiblement vertical. Ainsi chaque arceau est capable de pivoter entre une position de soutien de la bâche (figure 1), dans laquelle l'arceau 1 est disposé transversalement à l'axe longitudinal avant/arrière de la benne B, et une position de repos (figure 2) dans laquelle l'arceau 1 est disposé le long d'une paroi longitudinale de la benne B.

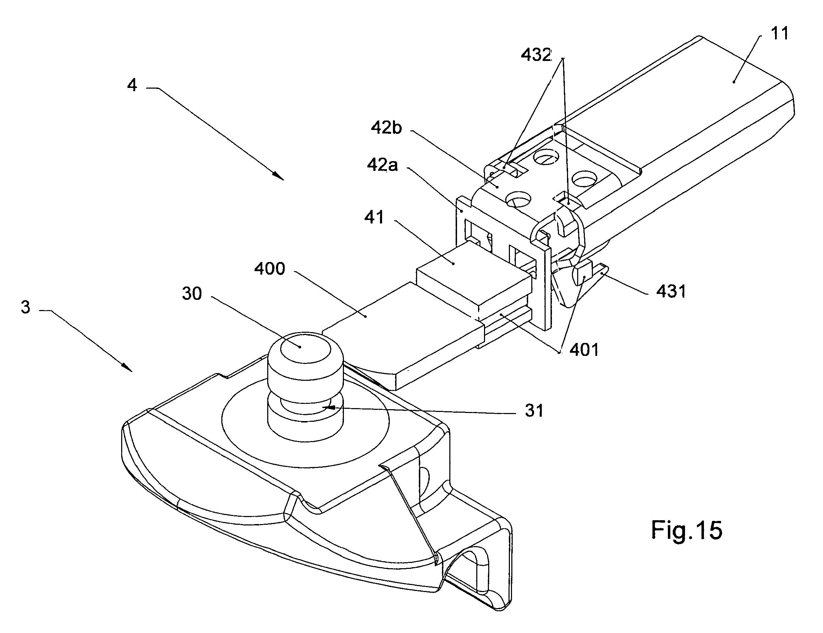

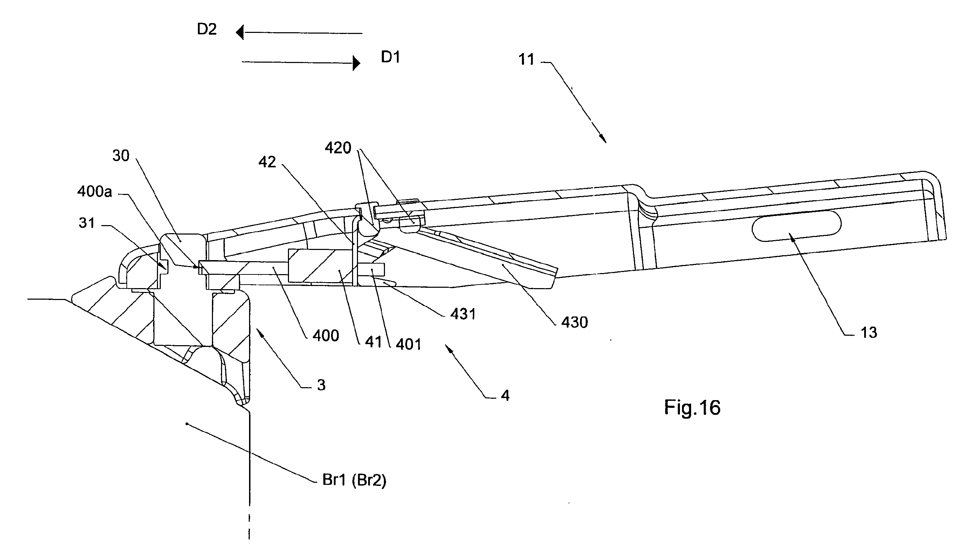

Chaque arceau 1 peut à son extrémité opposée être solidarisé à la benne dans une position de soutien (position des arceaux de la figure 1), à l'aide d'un ensemble de fixation de l'invention, qui comprend un support 3 apte à coopérer avec un embout d'arceau 11, et un mécanisme de verrouillage/déverrouillage élastique 4 (figures 15 et 16). Le mécanisme de verrouillage/déverrouillage élastique 4 permet de solidariser l'embout d'arceau 11 avec son support 3.

Dans la variante particulière de la figure 1, on a prévu aux deux extrémités d'un arceau 1, des ensembles de fixation identiques (support 3 / embout d'arceau 11 / mécanisme de verrouillage et déverrouillage élastique 4). Ceci n'est toutefois pas limitatif de l'invention. Plus généralement, un ensemble de fixation de l'invention peut être prévu à une seule extrémité d'un arceau.

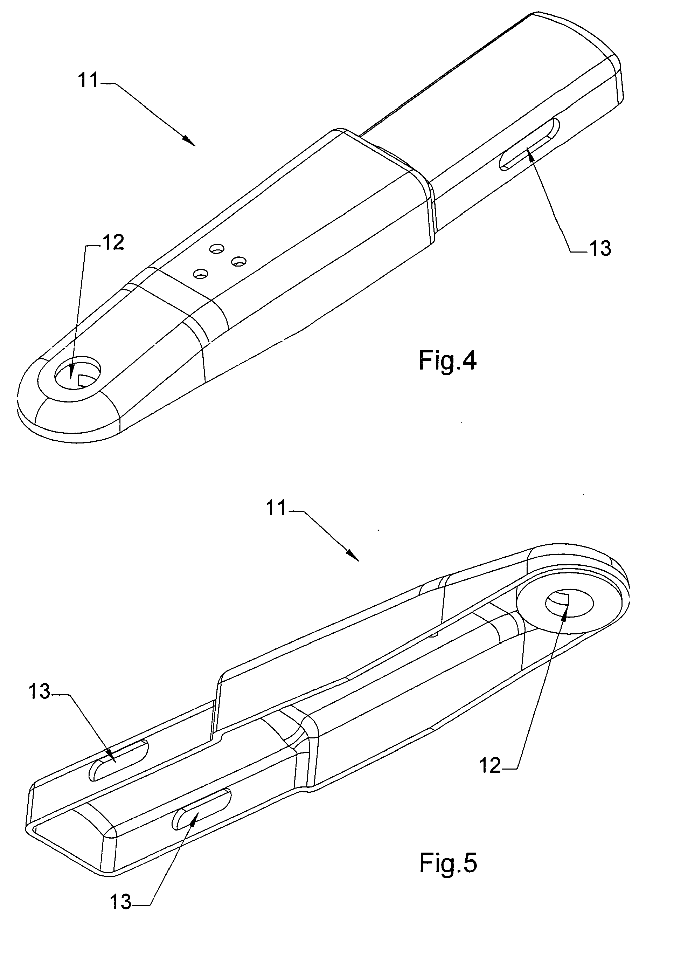

Un arceau 1 comprend une partie centrale 10 (profil d'arceau) et deux extrémités opposées appelées embout d'arceau 11 (figure 3). Ces embouts 11 peuvent indifféremment selon l'invention être des embouts rapportés sur la partie centrale 10 de l'arceau 1, ou la partie centrale 10 et les embouts d'arceau 11 peuvent constituer un arceau 1 monolithique. Comme représenté aux figures 4 et 5, un embout d'arceau 11 est constitué par un profil sensiblement en forme de U et comprend une cavité 12 permettant d'emboîter l'embout d'arceau 11 sur un support 3.

Les embouts d'arceau 11 comprennent également des fenêtres 13 permettant, dans le cas d'embouts 11 rapportés sur la partie centrale 10 de l'arceau 1, d'ajuster par coulissement la longueur d'arceau 1 entre les parois longitudinales B1, B2 de la benne B. A cet effet, les embouts 11 peuvent être fixés à différentes positions sur la partie centrale 10 de l'arceau 1, au moyen par exemple d'un système vis-écrou, afin d'obtenir la longueur d'arceau désirée entre les parois longitudinales B1, B2 de la benne B. Par ailleurs, il est possible de rendre l'arceau 1 télescopique, de manière à ce que sa longueur s'ajuste automatiquement à l'espace séparant les parois longitudinales B1 et B2 de la benne B, en ne serrant que partiellement le système vis-écrou. Ainsi, le système vis-écrou peut coulisser le long de la fenêtre 13 de l'embout d'arceau 11 lors d'une variation de l'espace séparant les parois B1 et B2 de la benne B.

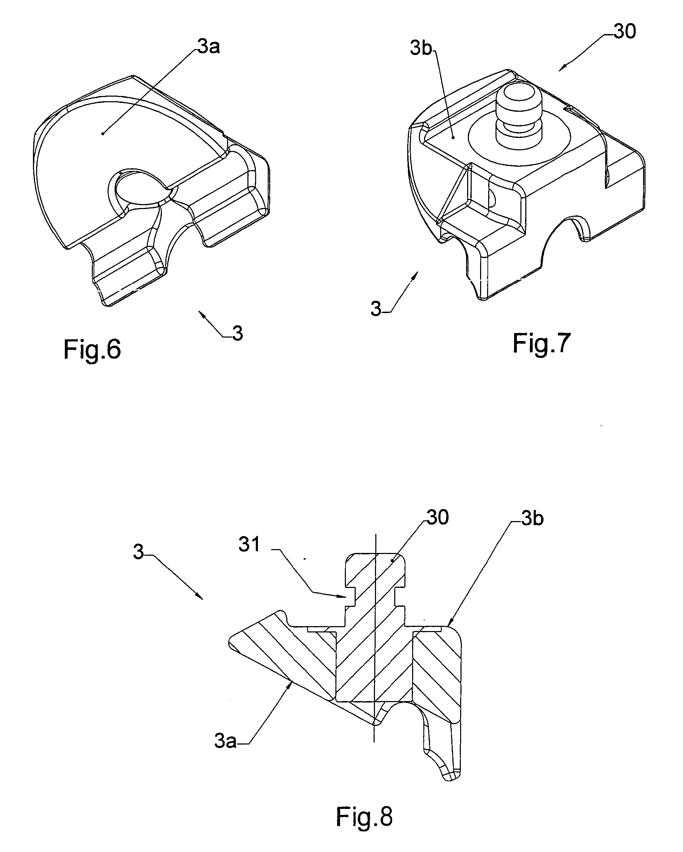

Les supports 3 d'arceau, représentés aux figures 6 à 8, sont fixés le long des rives Br1, Br2 (figure 1 et 16). Un support 3 comprend une embase 3a destinée à être fixée, par exemple par soudage, sur le dessus des rives Br1 et Br2 de la benne B, et une face d'assemblage 3b destinée à recevoir un embout d'arceau 11.

Plus précisément, le support 3 comprend sur sa face d'assemblage 3b un plot 30, faisant saillie vers l'extérieur de ladite face d'assemblage 3b et apte à être emboîté dans la cavité 12 d'un embout d'arceau 11. Ce plot 30 comprend une gorge périphérique 31.

Dans la variante particulière des figures annexées, les plots 30 et les cavités 12 des embouts d'arceau 11 sont cylindriques, de telle sorte qu'une fois emboîté sur son support 3, l'embout d'arceau 11 peut pivoter par rapport à son support 3, lorsque l'extrémité opposée dudit arceau est libre. Ceci n'est toutefois pas limitatif de l'invention. Dans une autre variante de réalisation, le plot 30 et la cavité 12 peuvent présenter une section transversale non circulaire et ne permettant pas un pivotement de l'embout d'arceau 11 par rapport au plot 30 (par exemple section polygonale, notamment carrée, rectangulaire, ...).

En référence à la figure 16, lorsqu'un support 3 est fixé sur la rive (Br1 ou Br2) de la benne B, il est situé en dehors du volume utile de la benne B, ce qui permet de limiter les risques de détérioration du support 3, et en particulier du plot 3, notamment lors des opérations de chargement ou déchargement de la benne.

Par ailleurs, le fait d'utiliser un support d'arceau 3 comprenant un plot 30 pour la solidarisation des embouts d'arceau 11 sur la rive de la benne B permet de manière avantageuse d'éviter la pénétration de matière (graviers, sable, ...) à l'intérieur dudit support 3, comparativement à une solution dans laquelle le plot serait porté par l'arceau et la cavité d'emboîtement de ce plot serait ménagée dans le support 3.

Pour solidariser un embout d'arceau 11 avec un support 3, puis libérer l'embout d'arceau 11 du support 3, l'ensemble selon l'invention comprend un mécanisme de verrouillage/déverrouillage élastique 4. Ce mécanisme de verrouillage/déverrouillage élastique 4 est logé à l'intérieur des embouts d'arceau 11 en forme de U, ce qui permet de manière avantageuse de le protéger contre les chocs ou d'éviter de le mettre en contact avec le contenu de la benne, notamment lors des opérations de déchargement la benne. Néanmoins, dans une autre variante de réalisation, ce mécanisme de verrouillage/déverrouillage élastique 4 pourrait être porté par un embout d'arceau sans être logé et protégé à l'intérieur de cet embout d'arceau. Par ailleurs, l'opérateur chargé de déverrouiller l'arceau 1 du support 3 peut manoeuvrer le mécanisme de verrouillage/déverrouillage 4 manuellement ou à l'aide d'une tige, un balai par exemple, si le mécanisme 4 n'est pas directement atteignable par l'opérateur

Le mécanisme de verrouillage/déverrouillage 4 comprend une gâche 40 qui est apte à coopérer avec la gorge 31 du plot 30 du support d'arceau 3 et qui est repoussée élastiquement dans une position de verrouillage dans laquelle la gâche 40 pénètre dans la gorge 31 du plot 30, et permet ainsi de bloquer en translation l'embout d'arceau 11 sur le plot 30. Le rappel élastique de la gâche 40 en position de verrouillage est obtenu à l'aide de moyens de rappels élastiques, par exemple un élastomère 41. Le mécanisme 4 comprend également un moyen de manoeuvre, par exemple un levier 43, qui est articulé sur une pièce de liaison 42, et qui permet à un opérateur d'amener manuellement la gâche 40 dans une position de déverrouillage, dans laquelle la gâche 40 est escamotée et dégagée de la gorge 31 du plot 30, ne fait plus obstacle à la libération de l'embout d'arceau 11.

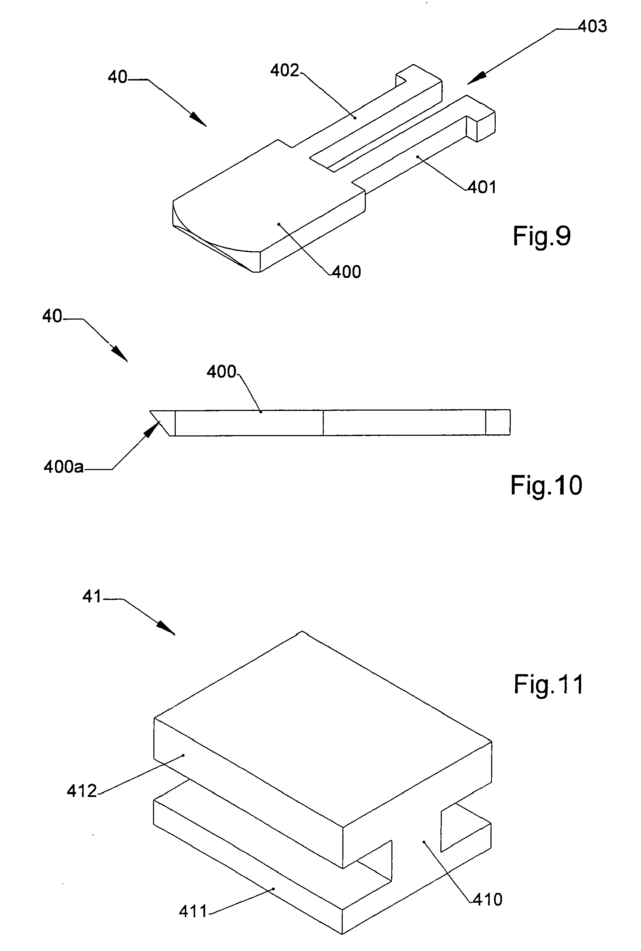

Plus précisément et en référence aux figures 9 et 10, la gâche 40 comprend un corps 400 sensiblement rectangulaire sur lequel se prolongent deux pattes 401, 402 en forme de L séparées par un espace 403. Le corps rectangulaire 400 comprend une face biseautée 400a destinée à pénétrer dans la gorge 31 du plot 30 lors de la fixation de l'embout d'arceau 11 sur le support 3. Cette face 400a est biseautée pour faciliter le passage de la gâche d'une position de verrouillage à une position de déverrouillage lors de l'insertion de la cavité 12 de l'embout d'arceau 11 sur le plot 30.

Les moyens de rappel élastique (figure 11) consistent en un profil élastomère 41 sensiblement en forme de H qui comprend une barre centrale 410 et deux barres latérales 411, 412 disposées en vis-à-vis l'une de l'autre et perpendiculairement à ladite barre centrale 410. Les moyens de rappel élastique 41 sont montés sur la gâche 40, et plus particulièrement de manière à ce que l'élastomère 41 soit bloqué entre les pattes 401, 402 et le corps rectangulaire 400 de la gâche 40, la barre centrale 410 du profil en H étant logée dans l'espace 403 séparant les deux pattes 401, 402.

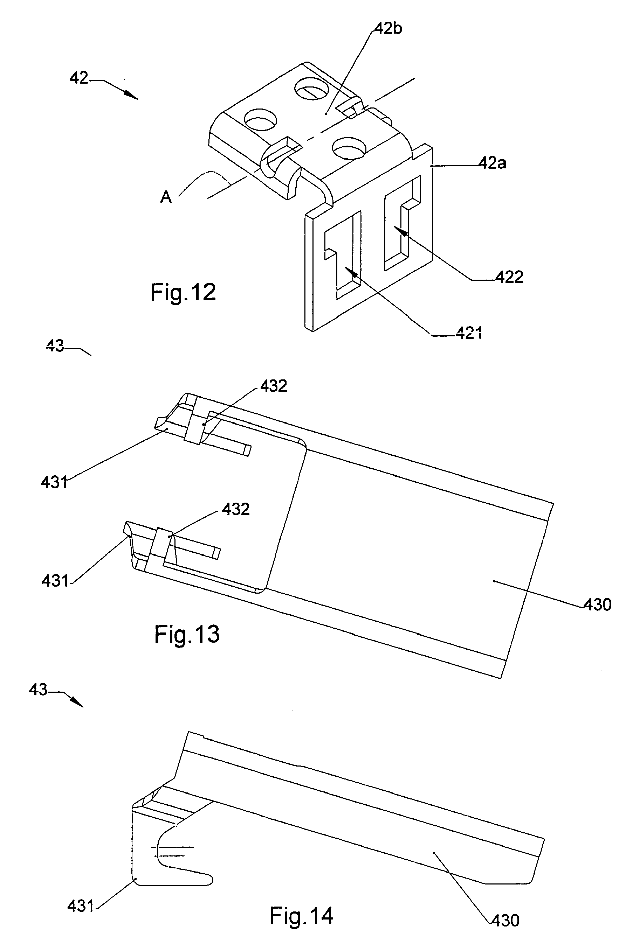

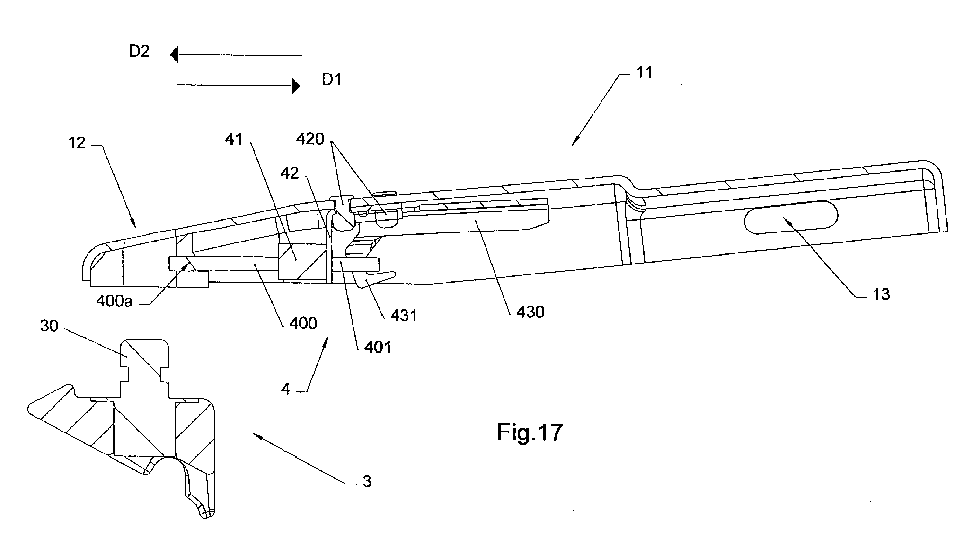

En référence aux figures 12 et 15, la pièce de liaison 42, sensiblement en forme de L, permet de supporter le mécanisme de verrouillage/déverrouillage élastique 4 à l'intérieur de l'embout d'arceau 11. La pièce de liaison 42 comprend une première face 42a sur laquelle sont ménagées deux fenêtres 421, 422 pour le passage de la gâche 40 et une face 42b destinée à être fixée à l'intérieur d'un embout d'arceau 11 au moyen par exemple de rivets 420 (voir figures 16 et 17). La pièce de liaison 42 comprend également un axe A sur lequel est monté le levier 43 pour la mise en rotation dudit levier 43. Plus particulièrement, les deux fenêtres 421, 422 sont aptes à guider en translation les deux pattes 401, 402 de la gâche 40 lors de l'actionnement de ladite gâche 40 en sorte de comprimer l'élastomère 41 contre la face 43a de la pièce de liaison 42.

Le levier 43 représenté aux figures 13 et 14 comprend un corps 430 comprenant deux crochets 431 et deux ergots 432. Les deux crochets 431 permettent d'accrocher les deux pattes 401, 402 en L de la gâche 40 de manière à ce que lorsque le levier 43 est actionné par l'opérateur, il pivote autour de l'axe A de la pièce de liaison 42 au moyen des ergots 432 et entraîne la gâche 40 dans un mouvement de translation guidée au travers des fenêtres 421, 422, et selon une direction D1 qui va de l'extrémité distale de l'arceau vers la partie centrale 10 de l'arceau 1. Ce pivotement du levier 43 permet d'amener la gâche 40 dans sa position de déverrouillage. Ensuite, l'élastomère 41 étant comprimé contre la face 42a de la pièce de liaison 42, la gâche 40 est automatiquement rappelée dans sa position de verrouillage dans un mouvement de translation guidée selon une direction D2, diamétralement opposée à la direction D1.

En référence aux figures 16 et 17, les étapes conduisant à la solidarisation d'un embout d'arceau 11 sur un support 3, puis à la libération d'un embout d'arceau 11 du support 3 vont à présent être décrites.

### Solidarisation d'un embout d'arceau (figure 16)

Pour solidariser un embout d'arceau 11 avec un support 3, l'opérateur doit dans un premier temps amener l'embout d'arceau 11 au dessus du support 3, qui est fixé sur la rive Br1 ou Br2 de la benne B, de manière à ce que la cavité 12 de l'embout d'arceau 11 et le plot 30 du support 3 soient alignés. Puis, l'opérateur descend l'arceau 1 afin de d'amener la gâche 40 jusqu'à la gorge 31 du plot 30. Au cours de ce mouvement, la gâche 40 glisse le long du plot 30 et est repoussée par le plot 30 en position escamotée, jusqu'à ce qu'elle soit sensiblement positionnée à hauteur de la gorge 31. Une fois dans cette position, la gâche 40 est repoussée en direction du plot 30 par les moyens de rappel élastique (élastomère 41) et pénètre dans la gorge 31 (position de verrouillage). L'arceau 1 est aiors verrouillé en position sur le plot 30. La face biseautée 400a de la gâche 40 facilite avantageusement l'engagement du mécanisme 4 sur le plot 30, en particulier pour le passage de la gâche 40 d'une position de verrouillage à une position de déverrouillage.

### Libération de l'embout d'arceau (figure 17)

Pour libérer un embout d'arceau 11 d'un support 3, l'opérateur doit simplement actionner le levier 43 par une simple pression sur le corps 430 dudit levier 43 afin de l'amener à pivoter autour de l'axe A de la pièce de liaison 42. Dans la variante particulière de réalisation illustrée sur les figures, cette pression sur le levier 43 se fait de bas en haut, ce qui facilite avantageusement la manoeuvre de libération pour l'opérateur. Au cours de cette rotation du levier 43, les crochets 431 du levier 43 entraînent la gâche 40 dans un mouvement de translation guidée au travers des fenêtres de la pièce de liaison 42 selon la direction D1 jusqu'à la position de déverrouillage de la gâche 40 dans laquelle sa face biseautée 400a sort de la gorge 31 du plot 30 (position escamotée). L'embout d'arceau 11 peut ainsi être soulevé et dégagé du plot 30 du support 3.

L'axe de pivotement du levier n'est pas nécessairement horizontal, mais pourrait également être vertical ou incliné entre la verticale et l'horizontale. Egalement, dans une autre variante de réalisation, le sens de pivotement du levier 43 pour l'escamotage de la gâche pourrait être inversé, la libération de l'embout d'arceau 11 étant obtenue par exemple en tirant sur le levier 43 du haut vers le bas.

Dans la variante de réalisation des figures 1 et 2, la benne B est également équipée de support additionnels 3' qui sont fixés sur la rive Br1 de la benne. Chaque support 3' associé à un arceau 1 est identique à un support 3 précédemment décrit. Un support 3' permet de solidariser l'arceau 1 auquel il est associé en position de repos (position des arceaux de la figure 2). L'emboîtement de l'embout 11 d'un arceau 1 sur un support 3', ainsi que les opérations de verrouillage/déverrouillage de l'arceau sont identiques à ce qui a été précédemment décrit pour les supports 3. La mise en oeuvre d'un support additionnel 3' permet avantageusement d'immobiliser parfaitement l'arceau 1 correspondant dans sa position repos par rapport à la benne B, et d'éviter tout mouvement intempestif de cet arceau, notamment lors des opérations de chargement ou déchargement de la benne.

On notera également qu'en position de repos, chaque arceau est avantageusement situé en dehors du volume utile de la benne en étant positionné au dessus de la rive Br1 de la benne.

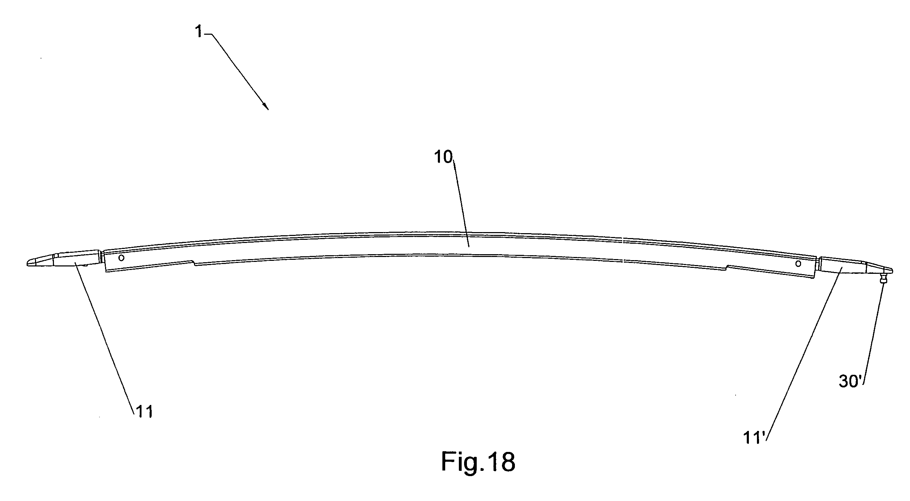

On a représenté sur la figure 18, une autre variante d'arceau 1, dont une seule des deux extrémités comporte un embout d'arceau 11 conforme à l'invention, l'autre extrémité comportant un embout d'arceau 11' pourvu d'un pivot 30' cylindrique. Ce pivot 30' est apte à être emboîté dans un support (non représenté) fixé sur la rive de la benne comportant une cavité complémentaire cylindrique, de manière à autoriser un pivotement de l'arceau 11' par rapport à la rive selon un axe de rotation vertical. Le plot 30' permet ainsi le déplacement de l'arceau 1 en rotation entre ses positions de soutien et de repos. De préférence, le pivot 30' est bloqué en translation dans ladite cavité complémentaire, par un moyen de blocage amovible, de type goupille. L'invention n'est pas limitée à l'exemple de réalisation des figures annexées. D'autres variantes de réalisation à la portée de l'homme du métier et couvertes par les revendications annexées peuvent être envisagées, sans pour autant sortir du cadre de l'invention. Par exemple, les moyens de rappels élastique ne se limitent pas à l'utilisation d'un élastomère, ledit élastomère pouvant être remplacé par tout autre moyen de rappel élastique remplissant la même fonction de rappel de la gâche en position de verrouillage. Egalement, la butée de verrouillage ne se limite pas à une gorge périphérique mais peut consister en une variation de surface sur le plot permettant de bloquer en translation voire également en rotation l'embout sur le support.

## Revendications

1. Ensemble de fixation d'un arceau (1) sur une benne (B), ledit ensemble comprenant un embout d'arceau (11), et un mécanisme de verrouillage/déverrouillage élastique (4), qui permet de solidariser l'embout d'arceau (11) avec la benne (B), et qui comprend un moyen de manoeuvre (43) permettant d'actionner le mécanisme de verrouillage/déverrouillage élastique (4) pour libérer l'embout d'arceau (11), **caractérisé en ce qu'**il comprend un support (3 , 3') qui est destiné à être fixé à la benne (B) et qui comprend un plot (30), **en ce que** l'embout (11) comporte une cavité (12) permettant son emboîtement sur le plot (30) du support (3, 3'), **en ce que** le mécanisme de verrouillage/déverrouillage élastique (4) comporte une gâche (40), qui est apte à coopérer avec le plot (30) du support d'arceau (3, 3'), et qui est repoussée élastiquement dans une position de verrouillage dans laquelle elle permet de bloquer au moins en translation l'embout d'arceau (11) sur le plot (30), et **en ce que** le moyen de manoeuvre (43) permet d'amener la gâche (40) dans une position escamotée dite de déverrouillage dans laquelle la gâche (40) ne fait pas obstacle à la libération de l'embout d'arceau (11).

2. Ensemble selon la revendication 1, **caractérisé en ce que** le mécanisme de verrouillage/déverrouillage élastique (4) est logé à l'intérieur de l'embout d'arceau (10), et le moyen de manoeuvre (43) de ce mécanisme (4) est accessible.

3. Ensemble selon la revendication 1 ou 2, **caractérisé en ce que** le moyen de manoeuvre (43) est actionnable pour libérer l'embout d'arceau (11) par simple pression.

4. Ensemble selon l'une des revendications 1 à 3, **caractérisé en ce que** la gâche est repoussée élastiquement en position de verrouillage par une pièce (41) en élastomère.

5. Ensemble selon l'une des revendications 1 à 4, **caractérisé en ce que** le plot (30) d'un support (3, 3') comporte une butée (31) coopérant avec la gâche (40) pour le blocage au moins en translation de l'embout d'arceau (11).

6. Ensemble selon la revendication 5, **caractérisé en ce que** la butée est formée par une gorge (31).

7. Ensemble selon l'une des revendications 1 à 6, **caractérisé en ce que** le plot (30) permet de repousser et d'escamoter la gâche (40) lors du mouvement d'emboîtement de l'embout d'arceau (11) sur le plot (30) jusqu'à ce que la gâche (40) atteigne sa position de verrouillage.

8. Ensemble selon l'une des revendications 1 à 7, **caractérisé en ce que** le plot (30) et la cavité (12) d'emboîtement de l'embout d'arceau (11) sont cylindriques

9. Arceau (1) de benne et ensemble de fixation visé à l'une de revendications 1 à 8, l'embout d'arceau (11) faisant partie intégrante de l'arceau ou étant une pièce rapportée.

10. Arceau (1) de benne et ensemble de fixation selon la revendication 9, **caractérisés en ce que** la longueur de l'arceau (1) est réglable.

11. Arceau (1) de benne et ensemble de fixation selon la revendication 10, **caractérisés en ce que** l'arceau (1) comporte un profil d'arceau (10) et l'embout d'arceau (11) est une pièce rapportée, qui est coulissante par rapport à ce profil d'arceau (10), et qui peut être bloquée dans différentes positions pour le réglage de la longueur de l'arceau.

12. Benne (B) équipée d'au moins un arceau et d'un ensemble de fixation visés à l'une des revendications 9 à 11.

13. Benne et arceau selon la revendication 12, **caractérisés en ce que** l'arceau (1) est apte à pivoter à au moins une de ses deux extrémités par rapport à la benne

14. Benne et arceau selon la revendication 12 ou 13, **caractérisés en ce que** chaque support (3 ; 3') d'arceau est fixé sur le dessus de la rive (Br1 ou Br2) en dehors du volume utile de la benne.

15. Benne et arceau selon l'une des revendications 12 à 14, **caractérisés en ce qu'**à chaque arceau (1) est associé au moins un support d'arceau (3) qui permet de solidariser l'arceau (1) avec la benne (B) dans une position dite de soutien dans laquelle l'arceau (1) est positionné transversalement à l'axe longitudinal avant/arrière de la benne.

16. Benne et arceau selon l'un des revendications 12 à 15, **caractérisés en ce qu'**à chaque arceau (1) est associé au moins un support d'arceau (3') qui permet de solidariser l'arceau (1) avec la benne (B) dans une position dite de repos, dans laquelle l'arceau (1) est positionné le long de l'une des parois longitudinales de la benne.

17. Benne et arceau selon la revendication 16, **caractérisés en ce que** dans sa position de repos, l'arceau est positionné au dessus d'une rive (Br1) de la benne (B).
